(19)

Europäisches Patentamt

European Patent Office

Office européen des brevets

(11)  **EP 2 849 426 A1**

(12)  # EUROPEAN PATENT APPLICATION

(43) Date of publication:
  **18.03.2015 Bulletin 2015/12**

(51) Int Cl.:
  *H04N 1/60* (2006.01)   *H04N 9/64* (2006.01)

(21) Application number: **14183196.6**

(22) Date of filing: **02.09.2014**

(84) Designated Contracting States:
  **AL AT BE BG CH CY CZ DE DK EE ES FI FR GB GR HR HU IE IS IT LI LT LU LV MC MK MT NL NO PL PT RO RS SE SI SK SM TR**
  Designated Extension States:
  **BA ME**

(30) Priority: **16.09.2013 EP 13306258**

(71) Applicant: **Thomson Licensing**
  **92130 Issy-les-Moulineaux (FR)**

(72) Inventors:
  • **Chamaret, Christel**
   **35576 Cesson-Sévigné (FR)**
  • **Baveye, Yoann**
   **35576 Cesson-Sévigné (FR)**
  • **Urban, Fabrice**
   **35576 Cesson-Sévigné (FR)**

(74) Representative: **Lorette, Anne**
   **Technicolor**
   **1, rue Jeanne d'Arc**
   **92130 Issy-les-Moulineaux (FR)**

(54)  **Color video processing system and method, and corresponding computer program**

(57)    The color video processing method (200) comprises:
- marking out (202) an object from a background in each frame of a sequence of frames of a color video,
- selecting (214) at least two successive frames,
- determining (216) a global color template from the backgrounds of the selected frames,
- for each selected frame and for colors of the marked out object, determining (218) an harmonized color according to the global color template, in such a way that the harmonized color is closer to the global color template than the original color.

Figure 2

EP 2 849 426 A1

**Description**

FIELD

The invention relates to color video processing, in particular in order to make the color video visually attractive to the viewer.

BACKGROUND

Some objects in a scene of a color video may be too salient (visually attractive) depending on their local contrast, change of illumination, so that they do not fit well in the complete scene.

Nevertheless, a direct (frame-based) harmonization of such object is not conceivable due to the visual inconsistency that it will produce. So, the invention proposes to smooth temporally the object harmonization when such object is detected as being not harmonious anymore within a scene.

In order to overcome this problem, the paper *"Color Harmonization for Videos"*, N. Sawant and N. J. Mitra, Indian Conference on Computer Vision, Graphics and Image Processing, 2008 describes techniques to produce a video sequence which is harmonized and pleasant for the viewer.

In a simple approach, the frames of the video are individually harmonized. However, this solution gives rise to visual inconsistency from one frame to another.

In another approach, the frames are processed in groups rather than individually. A common color template is determined and the frames are processed so that their colors come close to the common color template.

This method has the disadvantage of processing whole frames, which may change the global color spirit of the frames. The harmonized frame therefore differs significantly from the original one.

Besides, patent application publication US 2010/092085 A1 describes a method for harmonizing a sequence of frames. Each frame is divided between a foreground and a background. Then, a reference foreground is selected amongst the foregrounds of the frames, and the other foregrounds are harmonized with this reference foreground. Similarly, a reference background is selected amongst the backgrounds of the frames, and the other backgrounds are harmonized with this reference background.

This method has the disadvantage of not taking into account the harmony within each frame, i.e. between the foreground and the background of the frame.

There is therefore a need for a color video processing method able to harmonize each frame of a sequence of frames of a color video, by staying faithful to the original color video and with consistency from one frame to another.

SUMMARY OF THE INVENTION

It is proposed a color video processing method comprising:

- marking out an object from a background in each frame of a sequence of frames,
- selecting at least two successive frames,
- determining a global color template from the backgrounds of the selected frames,
- for each selected frame and for colors of the marked out object, determining an harmonized color according to the global color template, in such a way that the harmonized color is closer to the global color template than the original color.

Optionally, marking out the object comprises defining a window encompassing the object.

Optionally, marking out an object from a background in each frame comprises:

- for each frame of the sequence following the first, tracking the object from the previous frame(s) and marking out the tracked object.

Optionally, the method further comprises, for each frame of the sequence:

- associating each pixel of the frame with a saliency value,
- determining an attractiveness of the marked out object from the saliency values,
- determining whether the attractiveness of the marked out object satisfies a condition indicating that the marked out object is harmonious, the condition being hereafter referred to as "harmony condition",
- if the attractiveness of the marked out object does not satisfy the harmony condition, determining a frame color template from the background, the frame being hereafter referred to as "non-harmonious frame",

and each selected frame is a non-harmonious frame, and the global color template is determined from the color templates of the selected frames.

Optionally, the attractiveness comprises a mean and a deviation of the saliency values of the pixels of the marked out object.

Optionally, the harmony condition comprises: the mean is smaller than a predefined mean threshold and the deviation is smaller than a predefined deviation threshold.

Optionally, selecting at least two consecutive frames comprises:

- determining whether successive non-harmonious frames are in number equal or greater than a predefined threshold equal to at least two,
- if it is the case, selecting the successive non-harmonious frames.

Optionally, determining a frame color template from the background of a frame comprises:

- selecting one amongst predefined color templates, each predefined color template indicating at least one color range in a cyclic color sequence,
- determining a frame template shift,
- applying the frame template shift to each color range of the selected predefined color template in order to obtain the frame color template.

Optionally, determining the global color template comprises:

- selecting one amongst predefined color templates, each predefined color template indicating at least one color range in a cyclic color sequence,
- determining a global template shift,
- applying the global template shift to each color range of the selected predefined color template in order to obtain the global color template.

Optionally, determining the global color template from the frame color templates of the selected frames comprises:

- selecting a predefined color template of a selected frame,
- determining the global template shift from the frame template shifts of the selected frames.

Optionally, the global template shift is a mean of the frame template shifts.

Optionally, selecting a predefined color template comprises:

- selecting the predefined color template used the most to obtain the frame color templates of the selected frames.

It is further proposed a computer program comprising instructions which, when executed by a computer, make the computer carry out a color video processing method according to the invention.

It is further proposed a color video processing system comprising:

- a component for marking out an object from a background in each frame of a sequence of frames,
- a component for selecting at least two successive frames,
- a component for determining a global color template from the backgrounds of the selected frames,
- a component for, for each selected frame and for colors of the marked out object, determining an harmonized color according to the global color template, in such a way that the harmonized color is closer to the global color template than the original color.

BRIEF DESCRIPTION OF THE DRAWING

An embodiment of the invention will now be described by way of example only and with reference to the appended figures.

Figure 1 illustrates a color video processing system.
Figure 2 illustrates a color video processing method carried out for example by the color video processing method of figure 1.

Figure 3 illustrated predefined color templates which can be used in the color video processing method of figure 2. Figure 4 illustrates a simple example of carrying out the color video processing method of figure 2.

DETAILED DESCRIPTION OF THE DRAWING

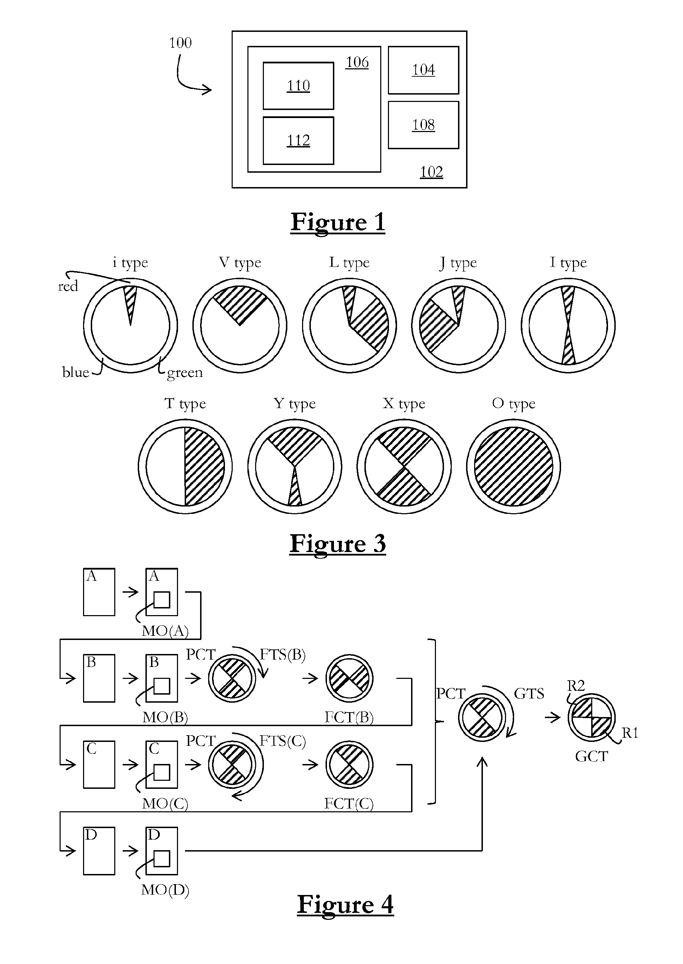

With reference to figure 1, a color video processing system 100 forming an exemplary embodiment of the invention will now be described.

The color video processing system 100 comprises a computer 102 including a central processing unit 104, a memory 106 and a human-computer interface 108 including for example a display device, a keyboard and a mouse.

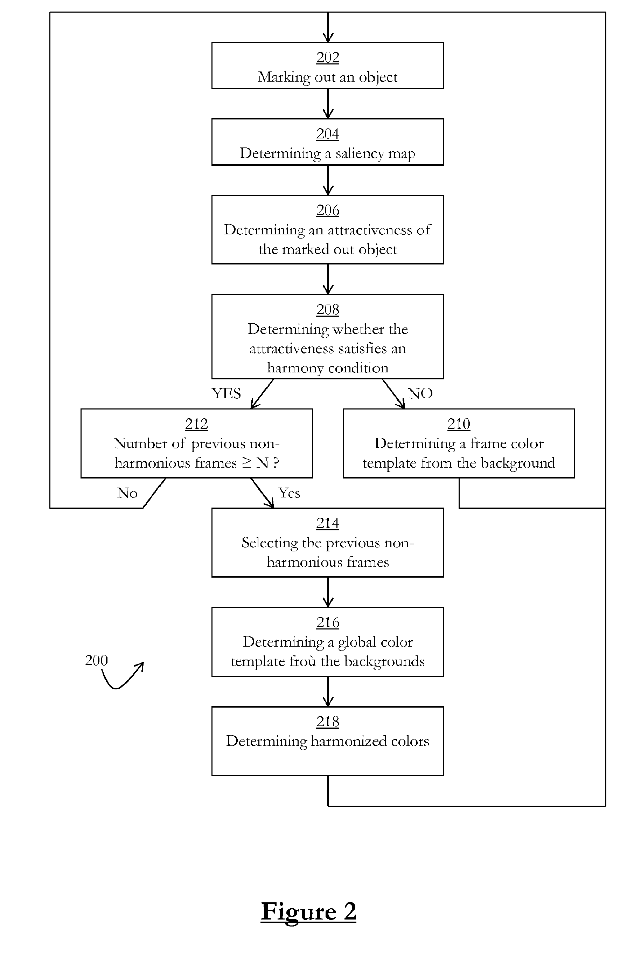

The color video processing system 100 further comprises a computer program 110 stored in the memory 106. The computer program 110 comprises instructions which, when executed by the computer 102, in particular by the central processing unit 104, make the computer 102 carry out a color video processing method which will be described with reference to figure 2.

The color video processing system 100 further comprises a color video 112 stored in the memory 106. The color video 112 comprises consecutive frames intended to be displayed one after the other on a display device, such as the display device of the human-computer interface 108. Each frame comprises pixels, and each pixel has a color. In the described example, the color of the pixel is represented by a hue value.

With reference to figure 2, a color video processing method 200 carried out by the color video processing system 100 of figure 1 and forming an exemplary embodiment of the invention will now be described. In the described example, the following steps are carried out by the computer 102 executing the instructions of the computer program 110.

The computer 102 carries out a first pass for each frame of a sequence of frames of the color video 112. The sequence of frames may be the whole color video 112. The first pass comprises the following steps.

During a step 202, the computer 102 marks out an object from a background in the frame.

In the described example, step 202 comprises defining a window, for example a rectangular window, encompassing the object. Furthermore, in the described example, step 202 comprises, for the first frame of the sequence, the computer 102 receiving instructions from an user through the human-computer interface 108 for marking out the object and, for each frame of the sequence following the first, the computer 102 automatically tracking the object from one or several preceding frame(s) and automatically marking out the tracked object. An example of such implementation is described in the paper "An Iterative Image Registration Technique with an Application To Stereo Vision", B.D. Lucas and T. Kanade, Joint Conference on Artificial Intelligence, pages 674 to 679, 1981. This paper describes a "KLT algorithm" which automatically detects a sparse set of feature points which have sufficient texture to track them reliably. Afterwards, detected points are tracked by estimating, for each point, the translation which minimizes the sum-squared-difference dissimilarity between windows centered at the current feature point position and the translated position.

During a step 204, the computer 102 determines a saliency map for the frame by associating each pixel of the frame with a saliency value. This can for example be carried out according to the method described in the patent application publication EP 1 695 288. The described method creates a saliency map where the most visually attractive pixels are depicted with values from 0 to 255. It is based on the modeling of visual system.

During a step 206, the computer 102 determines an attractiveness of the marked out object MO from the saliency values of the marked out object, i.e. in the described example from the pixels inside the window encompassing the object. Furthermore, in the described example, the determination of the attractiveness of the marked out object MO is carried out irrespective of the saliency values of the background, i.e. without taking into account those values.

In the described example the attractiveness of the marked out object comprises a mean and a deviation of the saliency values of the pixels of the marked out object.

During a step 208, the computer 102 determines whether the attractiveness of the marked out object MO satisfies a condition indicating that the marked out object MO is harmonious in the frame, the condition being hereafter referred to as "harmony condition".

In the described example, the harmony condition comprises: the mean is smaller than a predefined mean threshold and the deviation is smaller than a predefined deviation threshold.

During a step 210, if the attractiveness of the marked out object MO does not satisfy the harmony condition, the computer 102 determines a frame color template FCT from the background of the frame, irrespective of the colors of the marked object. Generally, a color template indicates at least one color range in a color sequence. In the described example, the color sequence is cyclic. A frame is supposed to be harmonious when all its colors are confined inside the color template, i.e. when all its colors belong to a color range of the color template. Hereafter, the frame including a marked out object MO whose attractiveness does not satisfy the harmony condition is referred to as a "non-harmonious frame".

In the described example, the step 210 first comprises selecting one amongst predefined color templates PCTs and determining a frame template shift FTS which is a value by which each color range of the selected predefined color template PCT is intended to be shifted, as it will be explained hereinafter.

In the described example, selecting a predefined color template PCT and determining a frame template shift FTS comprises determining a color histogram of the background of the frame, for example in the HSV (Hue-Saturation-Value) space. For example, the color histogram is equal to the normalized hue distribution weighted by saturation and value (in the sense of the HSV color model). In the described example, the color histogram is computed from the following equation:

$$M_i = \frac{1}{\sum_{(x,y)} S[x,y] * V[x,y]} * \sum_{(x,y) \in \{(u,v) \backslash H[u,v]=i\}} S[x,y] * V[x,y]$$

where $M = [M_i]$ is the color histogram comprising a value $M_i$ for each bin i delimited by the values u and v of S*V, S[x,y] is the saturation of the pixel located at position [x,y] in the frame, V[x,y] is the value of the pixel located at position [x,y], and (x,y) represents the pixel located at position [x,y].

Selecting a predefined color template PCT and determining a frame template shift FTS further comprises selecting the predefined color template PCT and the associated frame template shift FTS that best correspond to the color histogram, by minimizing a function across every predefined color template PCT and every possible template shift. In the described example, the function is the Kullback-Leibler divergence:

$$\min_{m,\alpha} \sum_i M_i * \ln\left(\frac{M_i}{P_i(m,\alpha)}\right)$$

where $P_i(m, \alpha)$ is the uniform distribution of the predefined color template PCT m for a template shift $\alpha$, this uniform distribution being for example defined by:

$$P_i(m,\alpha) = \sum_{\substack{\text{color range(s)} \\ \text{of template m}}} e^{\frac{-1}{1-\left(\frac{2\alpha}{w_m}\right)^{10}}}$$

where $w_m$ is the length of the considered color range of the template m.

In the described example, the step 210 further comprises applying the determined frame template shift FTS to each color range of the selected predefined color template PCT in order to obtain the frame color template FCT.

During a step 212, if the attractiveness of the marked out object MO does satisfy the harmony condition, the computer 102 determines whether there are previous successive non-harmonious frames in number equal or greater than a predefined threshold N equal to at least two.

During a step 214, if the previous successive non-harmonious frames are greater in number than the predefined threshold, the computer 102 selects the previous successive non-harmonious frames in order to harmonize their colors, as it will be described starting from step 216. Hereafter, those successive non-harmonious frames are referred to as "selected frames". Else, the computer 102 does not harmonize the colors of the previous successive non-harmonious frames.

If successive non-harmonious frames are selected, the computer 102 then carries out a second pass comprising the following steps.

During a step 216, the computer 102 determines a global color template GCT from the backgrounds of the selected frames, irrespective of the colors of the marked out objects MOs of the selected frames.

In the described example, step 216 comprises selecting one amongst predefined color templates PCTs, for example the ones of step 210, and determining a global template shift GTS applied to the range(s) of the selected predefined color template PCT to obtain the global color template GCT.

In the described example, the global color template GCT is determined from the frame color templates FCTs of the selected frames.

In the described example, step 216 comprises selecting the predefined color template PCT from which the frame color template FCT of one of the selected frames is obtained. In the described example, the selection is carried out by selecting the predefined color template PCT used the most often to obtain the frame color templates FCTs of the selected frames.

In the described example, step 216 further comprises determining the global template shift GTS from the frame template shifts FTSs of the selected frames. For example, the global template shift GTS is a mean of the frame template shifts FTSs of the selected frames.

During a step 218, for each selected frame, the computer 102 determines, for colors of the marked out object MO, a color, hereafter referred to as "harmonized color", which is closer to the global color template GCT than the original color. Preferably, the harmonized colors are located inside the global color template GCT, i.e. within one of its color range(s).

In the described example, step 218 comprises carrying out a color segmentation on the marked out object MO of the selected frame. During the color segmentation, the marked out object MO is divided into segments, each segment regrouping pixels having colors close to each other according to a color similarity condition. An example of color segmentation may be found in "Learning Color Names for Real-World Applications", J. van de Weijer et al, IEEE Transactions in Image Processing, 2009.

In the described example, step 218 further comprises associating each segment of the marked out object MO with one range of the global color template GCT, for example with the closest one according to a color proximity condition. For example, each segment is associated with the range which is the closest to a mean of the colors of the pixels of the segment.

In the described example, step 218 further comprises determining, for each pixel of the marked out object MO, an harmonized color which is closer to the range of the global color template GCT associated with the segment to which the pixel belongs than the original color of the pixel. In a specific and non-limiting embodiment, the original color of the pixel is modified in step 218 according to the harmonized color. Exemplarily, the original color of the pixel is replaced by the harmonized color. For example, the determination of the harmonized color is carried out by applying a function, called harmonizing function, to the color of each pixel. Preferably, the harmonizing function is a sigmoid function of the color. In this way, when the color of the pixel is far away from the color range, it is possible to choose the sigmoid function so that its asymptotic behavior gives an harmonized color inside the color range, for example at the closest edge of the color range. Furthermore, when the color of the pixel is inside the color range, it is possible to choose the sigmoid function so as to obtain a linear modification of the color, which gives a natural feeling to the color harmonization.

In the described example, the harmonizing function comprises a parameter indicating the position of the frame in the selected frames, so that, all things being equal, the same color is more and more modified along the sequence of selected frames. For instance, a color of a first selected frame would be less modified than the same color in a later selected frame. Modifying the original color of the pixel comprises replacing the original color by the harmonized color.

In the described example, the harmonizing function is:

$$H'(p) = \left[ C(p) + \frac{w}{2} * \tanh\left( \frac{2 * \|H(p) - C(p)\|}{w} \right) \right] * \frac{t}{Tv} + H(p) * \frac{Tv - t}{Tv}$$

where H'(p) is the harmonized color of the pixel p, H(p) is the hue value of the pixel p, C(p) is the central hue value of the color range associated with the segment to which p belongs, w is the length - along the color sequence of the global color template GCT - of the color range, || || refers to the distance - along the color sequence of the global color template GCT - between H(p) and C(p), t is the position of the selected frame in the sequence of selected frames and Tv is a predefined threshold equal at most to the number of selected frames.

In the described example, step 218 optionally comprises determining a color modification map by associating each pixel of the marked out object MO with a color modification value equal to the difference between its original color and its harmonized color. The color modification map may be advantageously used to replace in a later stage the original color of a pixel of the marked out object MO by the corresponding harmonized color.

With reference to figure 3, an example of nine predefined color templates PCTs is illustrated. In the described example, a color is represented by a hue value. Furthermore, each color template is represented as a hue wheel comprising a circle of hue values and herein color range(s) are represented as circle sector(s) (hatched). In this way, it is possible to represent the colors by angles on the wheel. The positions of the red, blue and green colors are indicated on the first predefined color template, and are at similar position in the other predefined color templates. Between each pair of these three positions, the color progressively morph from the color of the first position to the color of the second position.

The first predefined color template, referred to as "i type" color template, comprises only one color range having an arc-length of less than 30°, for example 20°.

The second predefined color template, referred to as "V type" color template, comprises only one color range having an arc-length between 60° and 120°, for example 90°.

The third predefined color template, referred to as "L type" color template, comprises only two color ranges, the first having an arc-length of less than 30°, for example 20°, and the second having an arc-length between 60° and 120°, for example 90°, and being shifted by +90° from the first (the shift is considered between their bisectors).

The fourth predefined color template, referred to as "J type" color template, comprises only two color ranges, the first having an arc-length of less than 30°, for example 20°, and the second having an arc-length between 60° and 120°, for example 90°, and being shifted by -90° from the first (the shift is considered between their bisectors).

The fifth predefined color template, referred to as "I type" color template, comprises only two color ranges, both having an arc-length of less than 30°, for example 20°, and the second being shifted by 180° from the first (the shift is considered between their bisectors).

The sixth predefined color template, referred to as "T type" color template, comprises only one color range having an arc-length between 120° and 240°, for example 180°.

The seventh predefined color template, referred to as "Y type" color template, comprises only two color ranges, the first having an arc-length between 60° and 120°, for example 90°, and the second having an arc-length of less than 30°, for example 20°, and being shifted by 180° from the first (the shift is considered between their bisectors).

The eighth predefined color template, referred to as "X type" color template, comprises only two color ranges, both having an arc-length between 60° and 120°, for example 90°, and the second being shifted by 180° from the first (the shift is considered between their bisectors).

The ninth predefined color template, referred to as "O type" color template, comprises only one color range having an arc-length 360°. The "O type" color template in order to not harmonize frames containing all hues equally, like frame containing rainbow pictures for example.

With reference to figure 4, a simple example of carrying out the color video processing method 200 of figure 2 will now be described.

The sequence of frames is assumed to start with frames A, B, C and D.

The computer 102 carries out steps 202 to 206 for frame A, and determines that the attractiveness of the marked out object MO(A) in frame A satisfies the harmony condition (step 208). The computer 102 then determines that there are no previous successive non-harmonious frames equal or greater in number than the predefined threshold N, assumed to be equal to two (there is no previous frame) (step 212).

The computer 102 then carries out steps 202 to 206 for frame B, and then determines that the attractiveness of the marked out object MO(B) in frame B does not satisfy the harmony condition (step 208). As a result, the computer 102 determines a frame color template FCT(B) for frame B (step 210). The frame color template FCT(B) is assumed to be obtained from the X type predefined color template PCT with a color template shift CTS of +90°.

The computer 102 then carries out steps 202 to 206 on frame C, and then determines that the attractiveness of the marked out object MO(C) in frame C does not satisfy the harmony condition (step 208). As a result, the computer 102 determines a frame color template FCT(C) for frame C (step 210). The frame color template FCT(C) is assumed to be obtained from the X type predefined color template PCT with a frame template shift FTS of +180°.

The computer 102 then carries out steps 202 to 206 for frame D, and determines that the attractiveness of the marked out object MO(D) in frame D does satisfy the harmony condition (step 208). As a result, the computer 102 determines that frame D is preceded by two non-harmonious frames: frames B and C, which are in number equal to two (step 212). As a result, the computer 102 selects frames B and C (step 214) to harmonize them.

The computer 102 then determines a global color template GCT from the frame color templates FCT(B) and FCT(C) (step 216). Both frame color templates FCT(B) and FCT(C) are obtained from the X type predefined color template, so that the X type predefined color template is selected for determining the global color template GCT. Furthermore, the global template shift GTS is determined as the mean of both color template shifts CTS(B) and CTS(C), that is (90°+180°)/2 = +135°. The resulting global color template GCT therefore comprises two color ranges R1 and R2, centered respectively on +135° and +315°. Hereafter, the two color ranges are assumed to each have a length of 90°.

For each of the frames B and C, the computer 102 then determines the harmonized color of each pixel of the marked out object MO (step 218). In the described example, the computer 102 carries out a color segmentation of both frames B and C. It is assumed that the segmentation of frame B comprises a segment which is associated with the color range R1. The center of the color range R1 is +135°.

Each pixel of this segment is therefore harmonized according to the previous harmonizing function, where: C(p) = +135°, w = 90°, t = 1 (frame B is the first frame of the sequence of selected frames {B, C}) and Tv is assumed to be equal to two, which gives:

$$H'(p) = \left[135 + \frac{90}{2} * \tanh\left(\frac{2 * \|H(p) - 135\|}{90}\right)\right] * \frac{1}{2} + H(p) * \frac{2-1}{2}$$

Similar operations are carried out for the other segments of frames B and C.

The computer 102 then goes on with the color video processing method 200 for the frames following frame D.

Once all frames of the color video 112 have been processed, the computer 102 produces a processed color video which is for example displayed on a display device, such as the display device of the human-computer interface 108.

The present invention is not limited to the embodiment previously described, but instead defined by the appended claims. It will in fact be apparent to the one skilled in the art that modifications can be applied to the embodiment previously described.

For example, the program instructions intended to make the computer 102 carry out each step of the color video processing method 200 could be replaced entirely or in part by a hardware component.

Furthermore, the frames are not limited to 2D pictures, but could also be for example 3D pictures.

Furthermore, the color of a pixel could be represented by another quantity or several other quantities, such as RVB values.

Furthermore, several objects instead of one could be marked out and color harmonized according to the method previously described.

Besides, the terms used in the appended claims shall not be understood as limited to the elements of the embodiments previously described, but on the contrary shall be understood as including all equivalent elements that the one skilled in the art is able to derive using their general knowledge.

**Claims**

1.   Color video processing method (200) comprising:

   - marking out (202) an object from a background in each frame of a sequence of frames,
   - selecting (214) at least two successive frames,
   - determining (216) a global color template from the backgrounds of the selected frames,
   - for each selected frame and for colors of the marked out object, determining (218) an harmonized color according to the global color template, in such a way that the harmonized color is closer to the global color template than the original color.

2.   Color video processing method (200) according to claim 1, further comprising modifying said colors of the marked out object according to said corresponding harmonized colors.

3.   Color video processing method (200) according to claim 1 or 2, wherein marking out (202) the object comprises defining a window encompassing the object.

4.   Color video processing method (200) according to any of claims 1 to 3, wherein marking out (202) an object from a background in each frame comprises:

   - for each frame of the sequence following the first, tracking the object from the previous frame(s) and marking out the tracked object.

5.   Color video processing method (200) according to anyone of claims 1 to 4, further comprising, for each frame of the sequence:

   - associating (204) each pixel of the frame with a saliency value,
   - determining (206) an attractiveness of the marked out object from the saliency values,
   - determining (208) whether the attractiveness of the marked out object satisfies a condition indicating that the marked out object is harmonious, the condition being hereafter referred to as "harmony condition",
   - if the attractiveness of the marked out object does not satisfy the harmony condition, determining (210) a frame color template from the background, the frame being hereafter referred to as "non-harmonious frame",

wherein each selected frame is a non-harmonious frame, and wherein the global color template is determined from the color templates of the selected frames.

6. Color video processing method (200) according to claim 5, wherein the attractiveness comprises a mean and a deviation of the saliency values of the pixels of the marked out object.

7. Color video processing method (200) according to claim 6, wherein the harmony condition comprises: the mean is smaller than a predefined mean threshold and the deviation is smaller than a predefined deviation threshold.

8. Color video processing method (200) according to any one of claims 5 to 7, wherein selecting at least two consecutive frames comprises:

   - determining whether successive non-harmonious frames are in number equal or greater than a predefined threshold equal to at least two,
   - if it is the case, selecting the successive non-harmonious frames.

9. Color video processing method (200) according to any one of claims 5 to 8, wherein determining (210) a frame color template from the background of a frame comprises:

   - selecting one amongst predefined color templates, each predefined color template indicating at least one color range in a cyclic color sequence,
   - determining a frame template shift,
   - applying the frame template shift to each color range of the selected predefined color template in order to obtain the frame color template.

10. Color video processing method (200) according to any one of claims 1 to 9, wherein determining (216) the global color template comprises:

    - selecting one amongst predefined color templates, each predefined color template indicating at least one color range in a cyclic color sequence,
    - determining a global template shift,
    - applying the global template shift to each color range of the selected predefined color template in order to obtain the global color template.

11. Color video processing method (200) according to claims 9 and 10, wherein determining the global color template from the frame color templates of the selected frames comprises:

    - selecting a predefined color template of a selected frame,
    - determining the global template shift from the frame template shifts of the selected frames.

12. Color video processing method (200) according to claim 11, wherein the global template shift is a mean of the frame template shifts.

13. Color video processing method (200) according to claim 11 or 12, wherein selecting a predefined color template comprises:

    - selecting the predefined color template used the most to obtain the frame color templates of the selected frames.

14. Computer program (110) comprising instructions which, when executed by a computer, make the computer carry out a color video processing method (200) according to any one of claims 1 to 13.

15. Color video processing system (100) comprising:

    - a component configured to mark out an object from a background in each frame of a sequence of frames,
    - a component configured to select at least two successive frames,
    - a component configured to determine a global color template from the backgrounds of the selected frames,
    - a component configured to determine, for each selected frame and for colors of the marked out object, an harmonized color according to the global color template, in such a way that the harmonized color is closer to the global color template than the original color.

16. Color video processing system according to claim 15, further comprising a component configured to modify said colors of the marked out object according to said corresponding harmonized colors.

100

106

110

112

104

108

102

**Figure 1**

i type

red

blue    green

V type

L type

J type

I type

T type

Y type

X type

O type

**Figure 3**

A → A
MO(A)

B → B → PCT FTS(B) → FCT(B)
MO(B)

C → C → PCT FTS(C) → FCT(C)
MO(C)

D → D
MO(D)

PCT GTS → R2 R1
GCT

**Figure 4**

**202**
Marking out an object

**204**
Determining a saliency map

**206**
Determining an attractiveness of the marked out object

**208**
Determining whether the attractiveness satisfies an harmony condition

YES                                    NO

**212**
Number of previous non-harmonious frames ≥ N ?

**210**
Determining a frame color template from the background

No                          Yes

**214**
Selecting the previous non-harmonious frames

**216**
Determining a global color template froù the backgrounds

200

**218**
Determining harmonized colors

# Figure 2

Europäisches
Patentamt

European
Patent Office

Office européen
des brevets

# EUROPEAN SEARCH REPORT

Application Number

EP 14 18 3196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TANG Z ET AL: "Colour harmonisation for images and videos via two-level graph cut", IET IMAGE PROCESSING,, vol. 5, no. 7, 1 October 2011 (2011-10-01), pages 630-643, XP006038682, ISSN: 1751-9667, DOI: 10.1049/IET-IPR:20100335 * figures 1,5b * | 1-16 | INV. H04N1/60 H04N9/64 |
| A,D | SAWANT N ET AL: "Color Harmonization for Videos", COMPUTER VISION, GRAPHICS&IMAGE PROCESSING, 2008. ICVGIP '08. SIXTH INDIAN CONFERENCE ON, IEEE, PISCATAWAY, NJ, USA, 16 December 2008 (2008-12-16), pages 576-582, XP031409499, ISBN: 978-0-7695-3476-3 * Section 3 * | 1-16 | |
| A | YOANN BAVEYE ET AL: "Saliency-Guided Consistent Color Harmonization", 3 March 2013 (2013-03-03), COMPUTATIONAL COLOR IMAGING, SPRINGER BERLIN HEIDELBERG, BERLIN, HEIDELBERG, PAGE(S) 105 - 118, XP047026048, ISBN: 978-3-642-36699-4 * abstract * | 1-16 | TECHNICAL FIELDS SEARCHED (IPC) H04N |
| A | DANIEL COHEN-OR ET AL: "Color harmonization", ACM SIGGRAPH 2006 COURSES ON , SIGGRAPH '06, 1 January 2006 (2006-01-01), page 624, XP055075986, New York, New York, USA DOI: 10.1145/1179352.1141933 ISBN: 978-1-59-593364-5 * abstract * | 1-16 | |

The present search report has been drawn up for all claims

| Place of search | Date of completion of the search | Examiner |
|---|---|---|
| Munich | 20 January 2015 | Bakstein, Hynek |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010092085 A1

- EP 1695288 A

**Non-patent literature cited in the description**

- **N. SAWANT ; N. J. MITRA.** Color Harmonization for Videos. *Indian Conference on Computer Vision, Graphics and Image Processing,* 2008
- **B.D. LUCAS ; T. KANADE.** An Iterative Image Registration Technique with an Application To Stereo Vision. *Joint Conference on Artificial Intelligence,* 1981, 674-679

- **J. VAN DE WEIJER et al.** Learning Color Names for Real-World Applications. *IEEE Transactions in Image Processing,* 2009